# EUROPEAN PATENT APPLICATION

(11) **EP 1 061 724 A2**
(43) Date of publication of application: **20.12.2000**
(21) Application number: 00305012.7
(22) Date of filing: 13.06.2000
(51) Int. Cl.: H04M 3/56, H04N 7/15, G10L 15/26

(54) **Conference voice processing method, apparatus and information memory medium therefor**

(30) Priority: 14.06.1999 JP 16737199
(71) Applicant: CANON KABUSHIKI KAISHA, Ohta-ku Tokyo 146-8501 (JP)
(72) Inventor: Saito, Ichiro, Ohta-ku, Tokyo (JP); Sugama, Sadayuki, Ohta-ku, Tokyo (JP); Ishinaga, Hiroyuki, Ohta-ku, Tokyo (JP); Imanaka, Yoshiyuki, Ohta-ku, Tokyo (JP); Matsumoto, Nobuyuki, Ohta-ku, Tokyo (JP); Taneya, Yoichi, Ohta-ku, Tokyo (JP); Mochizuki, Muga, Ohta-ku, Tokyo (JP)
(74) Representative: Beresford, Keith Denis Lewis

(57) **Abstract**

The invention provides an apparatus for automatically preparing the minutes of a conference.

When the voices of statements of plural speakers are entered into voice input means 12 in a state in which the vocalization data are registered in vocalization memory means 11 for each identification data of the plural speakers, the speaker and content of statement are recognized according to the registered data. The recognized content of statements is edited, together with the identification data of the speakers, by record preparation means 14 into a predetermined form to provide minutes data, whereby the minutes data of the content of statements of the plural speakers can be automatically prepared, on real time basis, edited in a predetermined form.

## Description

### BACKGROUND OF THE INVENTION

### Field of the Invention

The present invention relates to a conference voice processing method for preparing minutes data, a recording apparatus therefor, and an information memory medium storing a program for causing various processes, as a software.

### Related Background Art

In ordinary business firms, a meeting or conference by plural employees is an important event, and it is also important to record the oral statements at such meeting. In recent years, the conference can be also executed through communication equipment such as a telephone or a television conference system, and it is often also necessary to record the content of such conference.

For recording the content of the conference or communication mentioned above, there is ordinarily utilized voice recording by a tape recorder, as disclosed in the Japanese Patent Application Laid-Open No. 8-194492.

In business firms, it is often requested to summarize the content of the conference or communication as a document, and, in case recording of the statements of the attendees of the conference is required, there are prepared minutes in the form of a document.

In case of preparing minutes of a conference, an exclusive worker for recording the statements of the attendees attends the conference, so that such exclusive worker is required for the preparation of minutes. Also in case the content of a conference by communication has to be reduced to a document, it is prepared by reproducing the recorded voice, but such process is cumbersome and does not allow to obtain the document on real time basis.

Since the voice recognition apparatus of high performance is already developed, it is possible to reduce the content of the statements into text data by utilizing such voice recognition apparatus for the conference or communication. However, though such method allows to form the content of the statements of plural speakers, it is not possible to specify the speaker of each statement.

### SUMMARY OF THE INVENTION

In consideration of the foregoing, the object of an embodiment is to provide a conference voice processing method capable of recording the content of statements at a conference or a communication while specifying the speaker of each statement, a recording apparatus therefor, and an information memory medium storing, as a software, a program for causing a computer to execute the conference voice processing method of the present embodiment.

The above-mentioned object can be attained, according to a first embodiment of the present invention, by a conference voice recording apparatus comprising pronunciation memory means in which pronunciation data are registered for each identification data of plural speakers; voice input means for entering the voices of statements of the plural speakers; voice recognition means for recognizing the speaker and the content of statement thereof, entered into the voice input means, based on the pronunciation data and the identification data registered in the pronunciation memory means; and record preparation (formation) means for preparing (forming) minutes data of the content of statement recognized by the voice recognition means, edited in a predetermined form together with the identification data of the speakers.

Consequently, according to the conference voice processing method utilizing the conference voice recording apparatus of the embodiment, when the voice data of the statements of the plural speakers are entered into the voice input means in a state in which the pronunciation data are registered in the pronunciation memory means for each identification data of the plural speakers, the voice recognition means recognizes the speaker and the content of statement of the entered voice data, based on the pronunciation data and the identification data registered in the pronunciation memory means. As the record preparation means prepares thus recognized content of statement into minutes data edited into a predetermined form together with the identification data of the speaker, there are automatically prepared, on real time basis, minutes data of the content of statements of the plural speakers, edited in a predetermined form together with the identification data.

According to a second embodiment of the present invention, there is provided a conference voice recording apparatus comprising pronunciation memory means in which pronunciation data are registered for each identification data of plural speakers; voice input means for entering data of the voices of statements of the plural speakers; identification input means for successively entering the identification data of the speakers making statements; pronunciation selection means for selecting the pronunciation data of the corresponding speaker from the pronunciation memory means, corresponding to the identification data entered into the identification input means; voice recognition means for recognizing the content of statement of the voice data entered into the voice input means, based on the pronunciation data selected by the voice selection means; and recording preparation means for preparing minutes data of the content of statement recognized by the voice recognition means, edited in a predetermined form together with the identification data entered into identification input means.

Consequently, according to the conference voice processing method utilizing the conference voice recording apparatus of the present embodiment, in a state in which the pronunciation data are registered in the pronunciation memory means for each identification data of the plural speakers, simultaneous with the entry of the voice data of the statements of the plural speakers into the voice input means, the identification data of the speakers making statements are entered in succession from the identification input means. Then, corresponding to thus entered identification data, the pronunciation selection means selects the pronunciation data of the corresponding speaker from the pronunciation memory means, and, based on thus selected pronunciation data, the voice recognition means recognizes the content of statement of the entered voice data. As the record preparation means prepares thus recognized content of statement into minutes data edited into a predetermined form together with the identification data of the speaker, there are automatically prepared, on real time basis, minutes data of the content of statements of the plural speakers, edited in a predetermined form together with the identification data.

According to a third embodiment of the present invention, there is provided a conference voice recording apparatus comprising pronunciation memory means in which pronunciation data are registered for each identification data of plural speakers; plural voice input means for individually entering the data of the voices of statements of the plural speakers; voice recognition means for recognizing the content of statement of the voice data entered into the plural voice input means, based on the pronunciation data of the corresponding speaker in the pronunciation memory means; and record preparation means for preparing minutes data of the content of statement recognized by the voice recognition means, edited in a predetermined form together with the identification data of the speaker.

Consequently, according to the conference voice processing method utilizing the conference voice recording apparatus of the present embodiment, in a state in which the pronunciation data are registered in the pronunciation memory means for each identification data of the plural speakers, the voice data of the statements of the plural speakers are entered individually into the plural voice input means, and the voice recognition means recognizes the content of statement of the voice data entered into the plural voice input means, based on the pronunciation data of the corresponding speaker of the pronunciation memory means. As the record preparation means prepares thus recognized content of statement into minutes data edited into a predetermined form together with the identification data of the speaker, there are automatically prepared, on real time basis, minutes data of the content of statements of the plural speakers, edited in a predetermined form together with the identification data.

In a fourth embodiment, there is provided a data communication apparatus for executing data communication by plural speakers, the apparatus comprising the conference voice recording apparatus of the present invention, wherein the pronunciation memory means registers pronunciation data for each identification data of plural speakers convening by data communication, and the record preparation means is adapted to prepare the minutes data from the voice of statements of the plural speakers in the data communication.

Consequently, according to the conference voice processing method utilizing the conference voice recording apparatus of the present embodiment, when plural speakers convene through data communication, there are automatically prepared, on real time basis, minutes data of the content of statements in the conference by the data communication, edited in a predetermined form together with the identification data.

In the above-described conference voice recording apparatus, there may also be provided image display means for displaying the above-mentioned minutes data; correction input means for entering correction data on the minutes data displayed by the image display means; and correction execution means for correcting the minutes data, corresponding to the input data of the correction input means.

In such case, in a state in which the image display means displays the minutes data, the correction on thus displayed minutes data is entered by the correction input means. In response to the input data, the correction execution means corrects the minutes data, whereby the minutes data are appropriately corrected in the course of display.

In the above-described conference voice recording apparatus, there may also be provided image display means for displaying the above-mentioned minutes data; approval input means for entering an approval for the minutes data displayed on the image display means, for each identification data of the speaker; and approval addition means for adding an approval, entered into the approval input means, together with the identification data of the speaker to the minutes data.

In such case, in a state in which the image display means displays the minutes data, the approval for thus displayed minutes data is entered by the approval input means. In response to the input approval, the approval addition means adds the entered approval to the minutes data together with the identification data of the speaker, whereby the approval by the speaker is also recorded in the minutes data.

In the above-described conference voice recording apparatus, the approval input means can also enter the approval for the minutes data as voice data by the aforementioned voice input means. In such case, as the approval input means enters the approval for the minutes data in the form of voice data by the voice input means, the approval is entered for each speaker by the voice data specifying the speaker.

In the above-described conference voice recording apparatus, there may also be provided record printing means for printing the minutes data. In such case the record printing means prints the minutes data, whereby printed is a document recording the content of statements of the plural speakers together with the identification data of the speakers.

In the above-described conference voice recording apparatus, there may also be provided time detection means for detecting the current time at the entry of the voice of the speaker into the voice input means, and the record preparation means may prepare the minutes data, utilizing also the time detected by the time detection means.

In such case the time detection means detects the current time when the voice of statement of the speaker is entered into the voice input means, and the record preparation means prepares the minutes data utilizing the detected time, whereby the prepared minutes data also record the time of statement by the speaker.

Various means in the present invention may be so formed as to realize the corresponding functions, and include, for example, an exclusive hardware for a predetermined function, a computer to which a predetermined function is provided by a program, a predetermined function realized by a program in a computer, and combinations thereof.

For example, the pronunciation memory means is only required to register the pronunciation data for each identification data of the plural speakers, and includes a memory area of an information memory medium such as a RAM (random access memory). The voice input means is only required to enter the voice of statement, and includes a microphone for outputting a signal corresponding to the voice input, a tape recorder for reproducing recorded data, a communication I/F for receiving voice data etc.

The image display means is only required to display the minutes data, and includes, for example, a display device such as a CRT (cathode ray tube) or a LCD (liquid crystal display) device. The record printing means is only required to print the minutes data, and includes, for example, a printing device such as a laser printer or a bubble jet printer.

The correction input means is only required to enter a correction on the minutes data, and, includes, for example, a manually operated keyboard. The approval input means is only required to enter the approval for the minutes data, for each identification data of the speakers, and includes, for example, a voice recognition apparatus composed of a microphone and a computer.

A first information memory medium of the present embodiment stores a software readable by a computer connected with pronunciation memory means for registering pronunciation data for each identification data of the plural speakers and voice input means in which the voice data of statements of plural speakers are registered;
wherein the memory medium stores a program for causing the computer to execute recognition of the speaker and the content of statement of the voice data entered into the voice input means, based on the pronunciation data and identification data registered in the pronunciation memory means, and preparation of minutes data of the recognized content of statements, edited in a predetermined form together with the identification data of the speakers.

Consequently, when the program stored in the information memory medium of the present embodiment is read by the computer to execute the corresponding process, the computer recognizes the speaker and the content of statements of the voice data entered into the voice input means, based on the pronunciation data and identification data registered in the pronunciation memory means, and prepares the minutes data of the recognized content of the statements, edited in a predetermined form together with the identification data of the speakers. Therefore, when plural speakers make statements, there are automatically prepared, on real time basis, the minutes data of such statements, edited in a predetermined form together with the identification data.

A second information memory medium of a second embodiment stores a software readable by a computer connected with pronunciation memory means for registering pronunciation data for each identification data of the plural speakers and voice input means in which the voice data of statements of plural speakers are registered;
wherein the memory medium stores a program for causing the computer to execute reception of input of the identification data of the speaker making statement; selection of the pronunciation data of the corresponding speaker from the pronunciation memory means, corresponding to the entered identification data; recognition of the content of statement of the voice data entered into the voice input means, based on the selected pronunciation data; and preparation of minutes data of the recognized content of statement, edited in a predetermined form together with the identification data.

Consequently, when the program stored in the information memory medium of the present embodiment is read by the computer to execute the corresponding process, the computer receives the input of the identification data of the speaker making statement, and selects the pronunciation data of the corresponding speaker from the pronunciation memory means, corresponding to the entered identification data. It recognizes the content of statement of the voice data entered into the voice input means, based on the selected pronunciation data, and prepares the minutes data of the recognized content of the statement, edited in a predetermined form together with the identification data of the speakers. Therefore, when plural speakers make statements, there are automatically prepared, on real time basis, the minutes data of such statement, edited in a predetermined form together with the identification data.

A third information memory medium of a third embodiment stores a software readable by a computer connected with pronunciation memory means for registering pronunciation data for each identification data of the plural speakers and plural voice input means in which the statements of plural speakers are individually registered;
wherein the memory medium stores a program for causing the computer to execute recognition of the content of statement of the voice data entered into the voice input means, based on the pronunciation data and identification data registered in the pronunciation memory means, and preparation of minutes data of the recognized content of statements, edited in a predetermined form together with the identification data of the speakers.

Consequently, when the program stored in the information memory medium of the present embodiment is read by the computer to execute the corresponding process, the computer recognizes the content of statements of the voice data entered into the plural voice input means, based on the pronunciation data and identification data registered in the pronunciation memory means, and prepares the minutes data of the recognized content of the statements, edited in a predetermined form together with the identification data of the speakers. Therefore, when plural speakers make statements, there are automatically prepared, on real time basis, the minutes data of such statements, edited in a predetermined form together with the identification data.

The information memory medium in the present embodiment can be any hardware storing in advance a program for causing a computer to execute various processes as a software, and includes, for example, a ROM (read only memory) or a HDD (hard disk drive) fixed to an apparatus in which the computer constitutes a part, or a CD-ROM or a FD (floppy disk) detachably attached to an apparatus in which the computer constitutes a part.

Also the computer in the above embodiments can be any apparatus capable of reading a program consisting of a software and executing a corresponding process, and includes, for example, an apparatus principally composed of a CPU (central processing unit) and additionally provided with various devices such as a ROM, a RAM, an I/F etc. according to the necessity.

### BRIEF DESCRIPTION OF THE DRAWINGS

Fig. 1 is a schematic view showing the logic configuration of a conference voice recording apparatus embodying the present invention;
Fig. 2 is a block diagram showing the physical configuration thereof;
Fig. 3 is a schematic view showing a state in which the conference voice recording apparatus embodying the present invention is used in a conference;
Fig. 4 is a flow chart showing a subroutine of initialization in a conference voice processing method in the conference voice recording apparatus;
Fig. 5 is a flow chart showing a main routine of the conference voice processing method;
Fig. 6 is a flow chart showing a subroutine of a post process of the conference voice processing method; and
Fig. 7 is a plan view showing a printed image of the minutes data.
Fig. 8 is a chart of a flow upon using a conference room provided with a voice-character conversion output system explained above.

### DESCRIPTION OF THE PREFERRED EMBODIMENTS

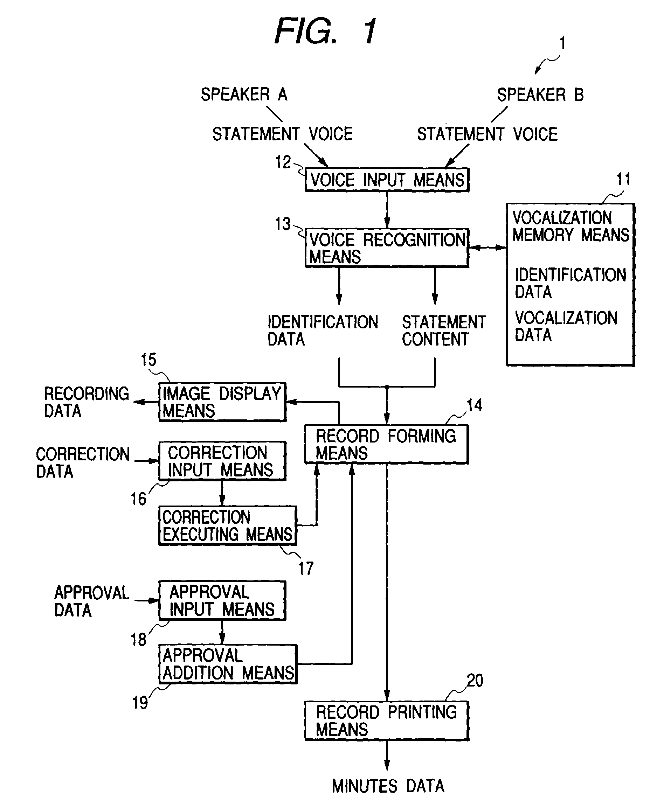

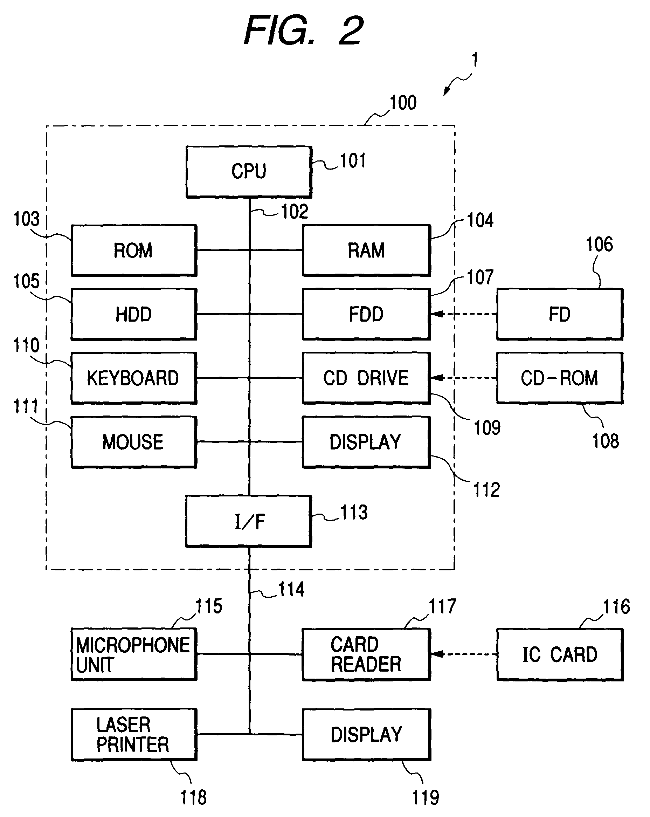

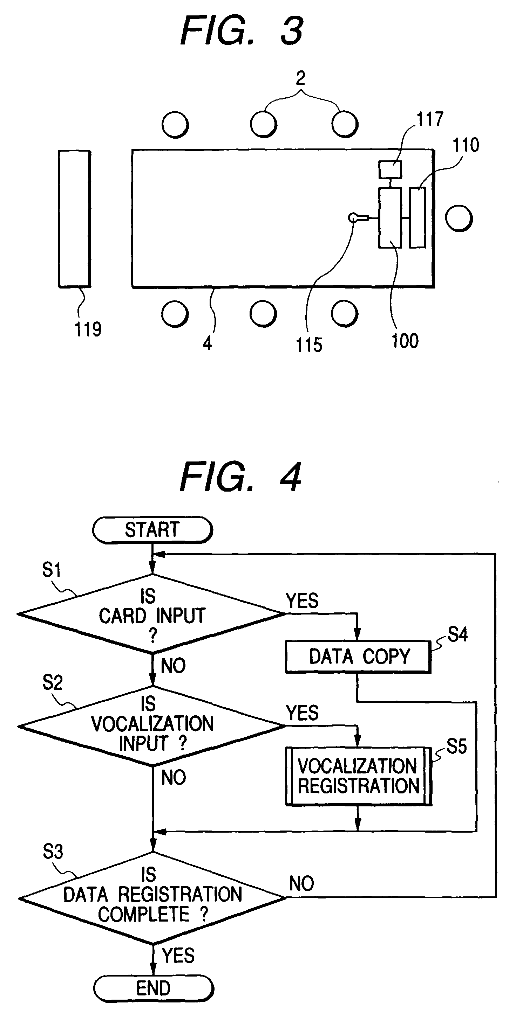

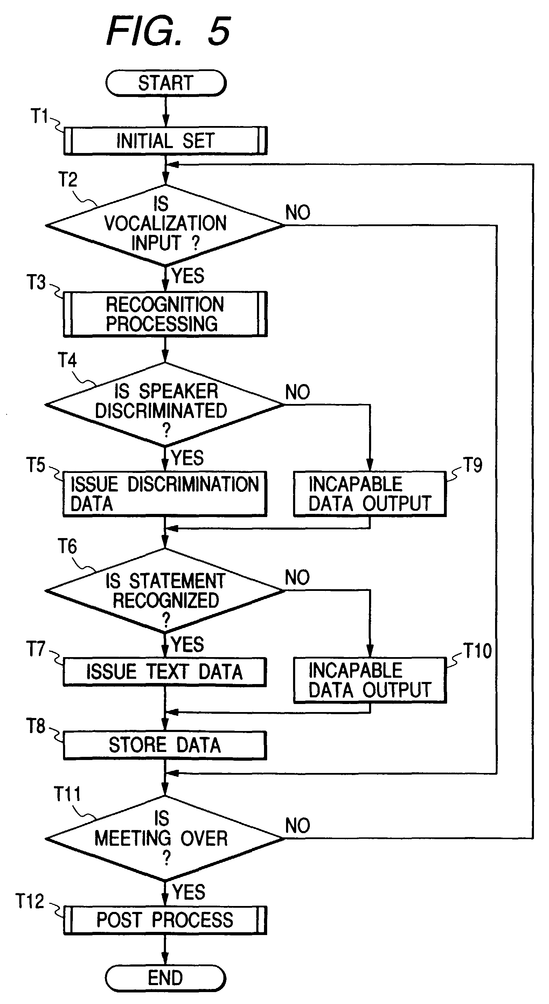

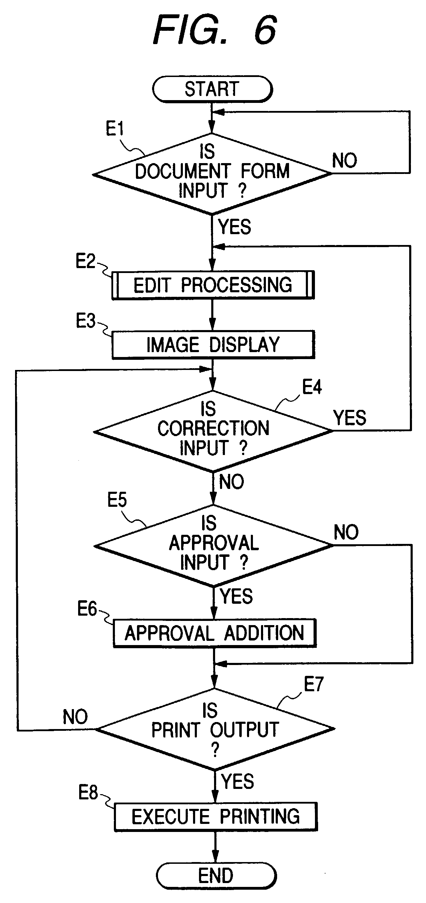

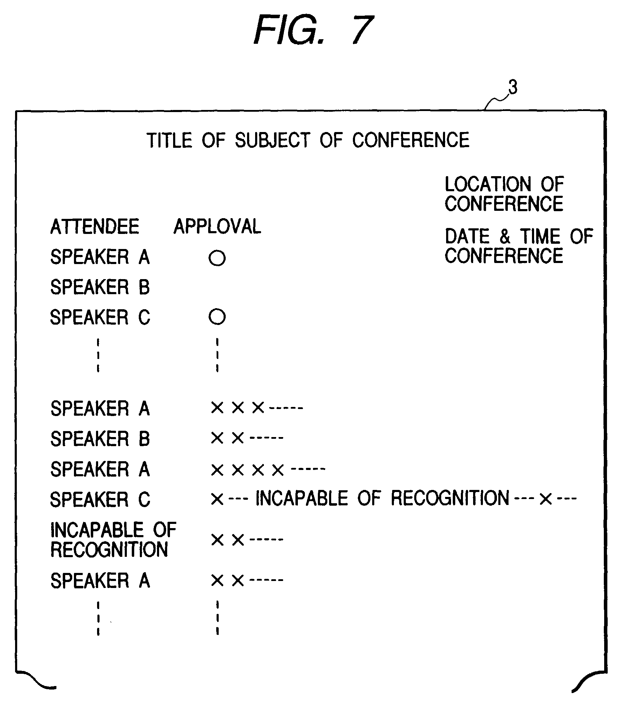

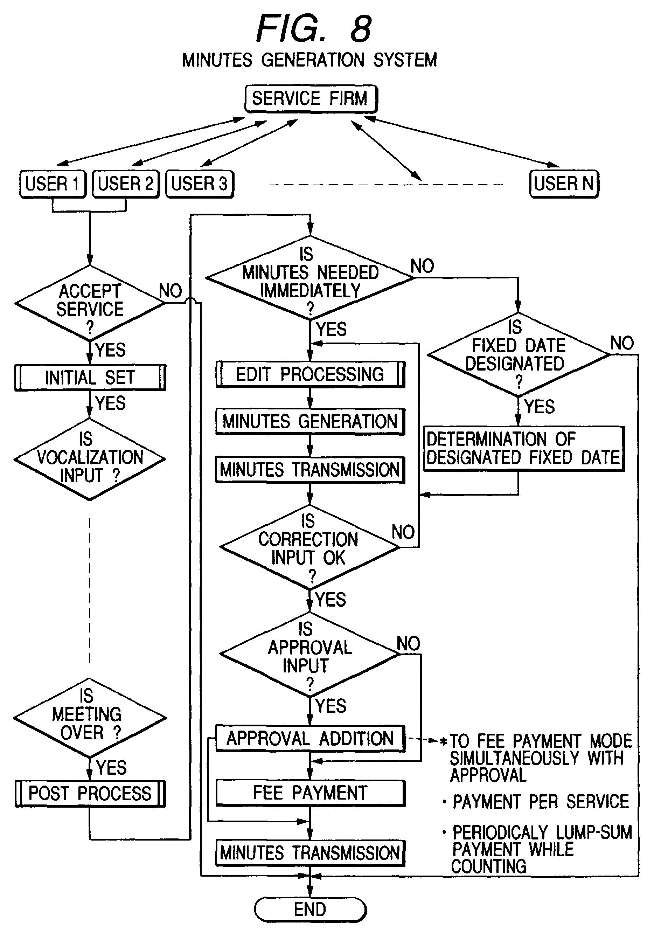

In the following, an embodiment of the present invention will be explained with reference to the attached drawings. In the following, however, portions of the embodiment identical with those in the aforementioned conventional example will be represented by same names and will be omitted from the explanation. Fig. 1 is a schematic view showing the logical configuration of a conference voice recording apparatus of the present embodiment; Fig. 2 is a block diagram showing the physical configuration; Fig. 3 is a schematic view showing a state in which the conference voice recording apparatus of the present embodiment is used in a conference; Fig. 4 is a flow chart showing the initialization in a conference voice processing method of the conference voice recording apparatus; Fig. 5 is a flow chart showing a main routine of the conference voice processing method; Fig. 6 is a flow chart showing a subroutine of a post process in the conference voice processing method; and Fig. 7 is a plan view showing a printed image of the minutes data; Fig. 8 is a chart of a flow upon using a conference room provided with a voice-character conversion output system explained above.

A minutes generation system 1 constituted by the conference voice recording apparatus of the present invention is provided, as shown in Fig. 2, with a computer system 100 consisting of an ordinary personal computer, and such computer system 100 is provided, as a principal hardware of the computer, with a CPU 101.

The CPU 101 is connected, through a bus line 102, to hardwares such as a ROM 103, a RAM 104, an HDD 105, an FDD (FD drive) 107 in which an FD 106 is detachably mounted, a CD drive 109 in which a CD-ROM 108 is detachably mounted, a keyboard 110, a mouse 111, a display 112, a USB (universal serial bus)-I/F 113 etc.

The USB-I/F 113 is connected, by a connector 114, to a microphone unit 115, a card reader 117 in which an IC (integrated circuit) card 116 is detachably mounted, a laser printer 118 and a large-sized display 119.

The minutes generation system 1 of the present embodiment is to be used in a conference attended by plural speakers 2 as shown in Fig. 3, and is so constructed as to prepare (form) the minutes data of such conference. Therefore the microphone unit 115 is designed omnidirectional, and thus receiving voice data from the entire circumference and outputting a signal to the connector 114. The IC card 116 is prepared and carried by each of the plural speakers 2 attending the conference, and registers the identification data of the speaker and the basic vocalization data, for example of the basic syllablaries, of the speaker.

In the minutes generation system 1 of the present embodiment, the hardwares such as the ROM 103, RAM 104, HDD 105, FD 106, CD-ROM 108, IC card 116 etc. constitute the information memory media, and the control programs and various data required for various functions of the computer system 100 are stored as software in at least one of such memory media.

For example, the control program for causing the CPU 101 of the computer system 100 to execute various process operations is stored in advance in the FD 106 or the CD-ROM 108. Such software is installed in advance in the HDD 105, and is copied to the RAM 104 and read by the CPU 101 at the start of the computer system 100.

Through reading of an appropriate program and executing various process operations by the CPU 101 of the computer system 100, in the minutes generation system 1 of the present invention, there are logically realized various means shown in Fig. 1 such as vocalization memory means 11, voice input means 12, voice recognition means 13, record preparation (formation) means 14, image display means 15, correction input means 16, correction execution means 17, approval input means 18, approval addition means 19, recording printing means 20 etc.

The vocalization memory means 11 corresponds to a memory area constructed for example in the HDD 105 so as to be recognizable by the CPU 101 corresponding to the control program for example in the RAM 104, and registers the vocalization data for each identification data of the plural speakers.

More specifically, in the minutes generation system 1 of the present embodiment, the IC 116 prepared and carried by each of the speakers 2 attending the conference registers identification data and vocalization data as explained in the foregoing, and various data registered in the IC card 116 are copied by the card reader 117 into the HDD 105, immediately before the start of the conference.

The voice input means 12 corresponds to a function of the CPU 101 for executing data processing of the voice input from the microphone unit 115 corresponding to the control program stored for example in the RAM 104, and receives the input of the voice data by statements of the plural speakers 2.

The voice recognition means 13 corresponds to a function of the CPU 101 for executing predetermined data processing corresponding to the control program stored for example in the RAM 104, and recognizes the speaker 2 and the content of statement of the speaker 2 of the voice data entered into the voice input means 12, based on the vocalization data and identification data of the vocalization memory means 11.

More specifically, the voice recognition means 13 causes the RAM 104 or the like to temporarily store a series of the voice data entered in succession in time into the voice input means 12 and specifies the identification data of the speaker 2, based on the vocalization data of the plural speakers in the vocalization memory means 11. When the speaker 2 is thus specified, it read the corresponding vocalization data from the vocalization memory means 11 and executes voice recognition utilizing such voice data, thereby converting the content of statement of the voice data, entered from the voice input means 12 and temporarily stored, into text data.

The record preparation means 14 corresponding to a function of the CPU 101 for executing predetermined data processing, corresponding to the control program stored for example in the RAM 104, and prepares minutes data of the content of statement recognized by the voice recognition means 13, edited in a predetermined form together with the identification data of the speaker 2.

The minutes data are prepared in a form, for example as shown in Fig. 7, recording the text data of the content of statements at the conference in the sequential order of such statements and the names of the speakers 2 of such statements, together with the title of subject of the conference, the location and data thereof, and a list of the names of the speakers 2 attending the conference and the identification data of the speakers.

The image display means 15 corresponds to a function of the CPU 101 for controlling the function of the display on the display 112, 119, corresponding to the control program stored for example in the RAM 104, and displays the minutes data prepared by the record preparation means 14 to the plural speakers 2 attending to the conference.

The correction input means 16 corresponds to a function of the CPU 101 for processing the input operation of the keyboard 110, corresponding to the control program stored for example in the RAM 104, and receives input of correction data for the minutes data displayed by the image display means 15.

The correction execution means 17 corresponds to a function of the CPU 101 for executing predetermined data processing, corresponding to the control program stored for example in the RAM 104, and corrects the minutes data corresponding to the input data of the correction input means 16. The aforementioned image display means 15 is capable of also displaying, on real time basis, the minutes data corrected by the correction execution means 17.

The approval input means 18 corresponds to a function of the CPU 101 for processing the voice input of the microphone unit 115, corresponding to the control program stored for example in the RAM 104, and enters an approval for the minutes data displayed by the image display means 15, for each identification data of the speakers 2.

The approval addition means 19 corresponds to a function of the CPU 101 for executing predetermined data processing, corresponding to the control program stored for example in the RAM 104, and adds the approval entered for example by voice data, to the minutes data, together with the identification data of the speakers 2.

More specifically, the approval input means 18 displays, for example on the display 119, the names of the speakers 2 in succession, together with a predetermined guidance text such as "Do you approve the minutes ?", and, when the speaker 2 whose name is displayed enters a statement such as "Yes" into the microphone 115, the speaker 2 of thus entered voice data is confirmed and an approval mark is attached in a corresponding position of the list of the speakers 2 in the minutes data.

The record printing means 20 corresponds to a function of the CPU 101 for controlling the data printing of the laser printer 118, corresponding to the control program stored for example in the RAM 104, and executes printing on a printing sheet 3 in the laser printer 118 as shown in Fig. 7.

Prior to the printing of the minutes data by the laser printer 118 serving as the record printing means 20 or the display of the minutes data by the display 112, 119 serving as the image display means 15, the minutes data may be stored in the HDD 105 or the FD 106 as a pre data processing.

The above-mentioned various means are realized utilizing a hardware such as the keyboard 110 or the display 112 according to the necessity, but are principally realized by the function of the CPU 101 which is a computer hardware, corresponding to the software stored in the information memory medium such as the RAM 104.

Such software is stored in the information memory medium such as the RAM 104 as a control program for causing the CPU 101 to execute various process operations such as registration of the vocalization data for each identification data of the plural speakers, reception of the voice data of the statements of the plural speakers 2 through the microphone unit 115, recognition of the speaker 2 and the content of statement of the entered voice data based on the registered vocalization data of the plural speakers 2, preparation of the minutes data of the recognized content of statements, edited in a predetermined form together with the identification data of the speaker 2, display of the prepared minutes data on the display 112, 119, reception of correction data, for example from the keyboard 110, for the displayed minutes data, correction of the minutes data corresponding thus entered data, entry of the approval for the displayed minutes data from the microphone unit 115 for each identification data of the speakers 2, addition of the entered approval to the minutes data together with the identification data of the speaker 2, and printing of the minutes data for example by the laser printer 118.

In the following there will be explained a conference voice processing method utilizing the minutes generation system 1 of the present embodiment, having the above-described configuration.
As preparation for the conference, the various units of the minutes generation system 1 are suitably positioned. For example, as shown in Fig. 3, there is prepared a large-sized table 4 at which the plural speakers 2 are to be seated, and an omnidirectional microphone unit 115 is provided in a position capable of receiving the statements of all the speakers 2.

Also a large-sized display 119 is provided in a position observable by all the speakers 2, then a keyboard 110 of the computer system 100 is provided in a position of a speaker 2 serving as the chairman, and a card reader 117 is provided close to the entrance (not shown) of the conference room.

In such state, each of the plural speakers 2 attending the conference carries the IC 116 in which the identification data of the speaker himself and the vocalization data thereof are registered, and, upon entering the conference room, sets the IC 116 in the card reader 117 as shown in Fig. 4.

Then the minutes generation system 1 reads, by the card reader 117, the vocalization data and identification data registered in the IC card 116 and copies such data in the HDD 105 (steps S1, S4), and the chairman, confirming the data input of all the plural speakers 2 attending the conference, enters the completion of the initialization through the keyboard 110 (step S3, T1).

However the speaker 2 attending the conference may forget to carry the IC card 116 or may forget the data registration therein. In such case, therefore, the minutes generation system 1 of the present embodiment is capable of assuming a registration mode by an input operation on the keyboard 110 (step S2), whereupon the identification data of the speaker 2 can be entered by the keyboard 110 and the voice data generated by the speaker 2 can be registered through the microphone unit 115 (step S5).

When the voice data of all the plural speakers 2 attending the conference are stored, together with the identification data, in the minutes generation system 1 as explained in the foregoing, the system 1, recognizing the completion of initialization, enters a state capable of automatically generating the minutes of the conference (step T1).

When the conference is initiated by the plural speakers 2 in response to the declaration by the chairman, the minutes generation system 1 receives the voice data of the statement entered from the speaker 2 through the microphone unit 115 (step T2) and executes voice recognition based on the voice data of all the speakers 2 stored temporarily in the HDD 105 (step T3).

It issues identification data by specifying the speaker 2 of the statement (steps T4, T5), then executes data conversion on the content of the statement (steps T6, T7) and stores the text data of the content of statement for example in the RAM 104, together with the identification data of the speaker 2 (step T8).

In case the speaker 2 making the statement cannot be specified, there are outputted exclusive incapable data (step T9), and, exclusive incapable data are outputted also in case the content of the statement cannot be recognized (step T10). These incapable data are also stored, together with the ordinary data, for example in the RAM 104 (step T8).

The minutes generation system 1 of the present embodiment executes the above-described serial process (steps T2 - T10) for each statement of the speaker 2, so that the content of the statements at the conference is time-sequentially recorded together with the identification data of the speakers 2. When the conference is terminated, the chairman manipulates the keyboard 110 to shift the minutes generation system 1 to the execution of a post process (steps T11, T12).

In such state, in response to the input of a document form by the chairman into the keyboard 110 (step E1), the minutes data in the RAM 104 are edited into a predetermined form (step E2). The minutes data thus prepared are displayed by the display 112, 119 to all the plural speakers 2 (step E3), whereby all the speakers can confirm the content of the minutes.

The displayed minutes data, having a layout similar to that of the printed result, contain the sequential text data of the content of statements at the conference together with the names of the speakers 2, as well as the title of subject of the conference, the location and date of the conference, and a list of the names and identification data of the speakers 2 attending the conference, as shown in Fig. 7.

In this state, in the position of the content of statement or the speaker 2 that cannot be recognized, there is displayed a blank corresponding to the time of such statement, together with a guidance message such as "not recognizable". Therefore, the chairman enters appropriate text data by the keyboard 110, under the consent of all the speakers (steps E2, E4). Also the result of voice recognition may be erroneous, and, in such case, the chairman corrects the text data by the keyboard 110, again under the consent of all the speakers.

The minutes data thus corrected are also displayed on real time basis (step E3), so that, upon completion of the correction, there is assumed a state of receiving the approvals by all the speakers by an input operation on the keyboard 110. In this state the names of the speakers 2 are displayed in succession on the display 119, together with a predetermined guidance text such as "Do you approve the minutes?", and the speaker 2 whose name is displayed enters a statement such as "Yes" into the microphone unit 115 in case of approving the content of the minutes (step E5).

The minutes generation system 1 confirms that the speaker 2 of such voice data coincides with the speaker 2 displayed on the display 119, and, upon such confirmation, displays an approval mark "O" in a corresponding position in the speaker list of the minutes data (step E6).

When the minutes data are approved by all the plural speakers 2, the chairman instructs, through the keyboard 110, the minutes generation system 1 to execute printing. In response, the minutes generation system 1 prints, by the number of the speakers 2, a minute document recording the text data of the content of the statements with the names of the speakers 2, together with the title of subject of the conference, the location and date thereof, a list of the names and identification data of the speakers 2 attending the conference, presence/absence of approval etc. (steps E7, E8).

As explained in the foregoing, the minutes generation system 1 of the present embodiment can automatically generate the minutes of the conference on real time basis and provide the printed output of such minutes. The minutes generation system 1 of the present embodiment is capable, by registering the voice data of the plural speakers 2, of specifying the speaker 2 making statement and converting the content of such statement into text data, thereby recording the text data of the content of statement in the minutes together with the identification data of the speaker 2, so that the speaker, time and content of each statement can be confirmed on the minutes.

Though the identification of the speaker 2 or the data conversion of the content of statement thereof by voice recognition is not yet technically complete at present, the minutes generation system 1 of the present embodiment displays the prepared minutes data on the displays 112, 119 and accepts correction by the keyboard 110, so that appropriate minutes can be finally obtained.

Besides, the system displays the prepared minutes data through the display 110 to the speakers 2 attending the conference and adds the approvals to the minutes data when they are approved by the speakers 2, so that the minutes data can also record the approvals by the speakers 2. In particular, such approval by the speaker 2 is entered by the voice input thereof, so that the input of the approval data can be accepted in a form capable of specifying the speaker 2, without requiring addition of an exclusive device for the input of the approval data.

The present invention is not limited to the foregoing embodiment but is subject to various modifications without leaving the scope of the invention. For example, in the above-described embodiment, there has been explained to realize the voice input means 12 by connecting the microphone unit 115 to the computer system 100, and to prepare the minutes data by the voice data entered into such microphone unit 115.

However, it is possible also to realize the voice input means by connecting a tape recorder (not shown) instead of the microphone unit 115 to the computer system 100, and to prepare the minutes data by the recorded voice from such tape recorder. It is also similarly possible to realize the voice input means by connecting a communication device such as a modem (not shown) instead of the microphone unit 115 to the computer system 100 and to prepare the minutes data by the voices transmitted and received by the communication device.

In the foregoing embodiment, there has been explained to realize the voice input means 12 by connecting an omnidirectional microphone unit 115 to the computer system 100 and to specify the speaker 2 and recognize the content of statement thereof from the voice entered into such microphone unit 115.

However it is also possible to provide each of the plural speakers 2 attending the conference with a switching device constituting identification input means (not shown), and to cause the speaker 2, making statement, to manipulate such switching device thereby entering the identification data of the speakers 2 making statements in succession. In such case, the computer system 100 serves as vocalization selection means, thus selecting the vocalization data of the speaker 2 from the vocalization memory means 11 corresponding to the entered identification data, and recognizes the content of statement of the voice data entered into the voice input means 12, based on thus selected vocalization data.

In such case, exclusive means is required for specifying the speaker 2 making statement and has to be precisely operated by the speaker 2, but it is rendered possible to securely specify the speaker 2 making statement without executing the voice recognition and to achieve the voice recognition of the content of statement with satisfactory accuracy.

It is also possible to respectively provide the plural speakers 2 attending the conference with plural microphone units of ultra high directionality to constitute plural voice input means, and to specify the speaker 2 making statement by the microphone unit by which the voice is entered. In such case there have to be prepared plural microphone units, but no particular operation is for the speakers 2.

Such configuration of respectively providing the plural speakers 2 with the voice input means is applicable also to a data communication apparatus (not shown) such as a telephone system or a television telephone system in which plural speakers 2 convene by data communication. In the data communication apparatus utilizing voice communication, the voice data from the source of communication are entered and subjected to data transmission, and those from the destination of communication are received by data reception and outputted in voice, so that the voice data of the speakers 2 of the source of communication and the destination of communication are clearly distinguished.

In case of applying the present invention to such data communication apparatus, the vocalization data are registered for each identification data of the speakers 2 of the source of communication and the destination of communication, and the voice data outputted by data reception are recognized by the vocalization data of the destination of communication while those transmitted by the voice input are recognized by the vocalization data of the source of communication.

Also in the foregoing embodiment, there has been explained the preparation of the minutes data, recording the content of statements of the plural speakers 2 and the identification data in the time-sequential order, but such minutes data may also be edited in various forms if desired. For example it is possible to record or delete the content of statement of a particular speaker 2, or to arrange the content of statements by the speakers 2 instead of the time-sequential order, or to change the font or color of printing for each speaker 2.

It is also possible to realize time detection means for detecting the current time at the data input of the voice of the speaker for example by TOD (time of day clock), and to utilize the detected time in the preparation of the minutes data. In such case, there can be generated more detailed minutes data, since the time of statement of the speaker can also be recorded therein.

Furthermore, in the foregoing embodiment, it has been explained that various means can be logically realized as functions of the minutes generation system 1, by the function of the CPU 101 according to the control program stored as a software for example in the RAM 104. However it is also possible to form each of such various means by a specific hardware, or to store a part of such various means as a software in the RAM 104 or the like and a remaining part as hardwares.

Also in the foregoing embodiment, it is assumed that the software, installed in advance from the CD-ROM 108 or the like into the HDD 105, is copied in the RAM 104 at the activation of the computer system 100 and that the software thus stored in the RAM 104 is read by the CPU 101, but it is also possible to utilize such software by the CPU 101 while such software is stored in the HDD 105 or to fixedly store the software in the ROM 103 in advance.

It is furthermore possible to store the software in the FD 106 or the CCD-ROM 108 which is a singly handlable information memory medium, and to install the software from such FD 106 or the like into the HDD 105 or the RAM 104, and it is also possible that, without such installation, the CPU 101 executes processing by directly reading the software from the FD 106 or the like.

Thus, in case of realizing various means of the minutes generation system 1 of the present invention by a software, such software is only required to be in a state in which the CPU 101 can read the software and can execute the corresponding operations. It is also possible to form the control program, realizing the above-mentioned various means, by a combination of plural softwares, and, in such case, the information memory medium constituting a single product is required to only store the minimum software necessary for realizing the minutes generation system 1 of the present invention.

For example, in case of providing a computer system 100, in which a known operating system is installed, with an application software by an information memory medium such as the CD-ROM 108, the software realizing various means of the minutes generation system 1 of the present invention can be realized by a combination of the application software and the operating system, so that the software of a portion depending on the operating system can be omitted from the application software stored in the information memory medium.

Also the method of supplying the software, stored in the information memory medium, with the CPU 101 is not limited to the case of directly mounting such information memory medium in the computer system 100. For example it is also possible to store such software in an information memory medium of a host computer and to connect such host computer to a terminal computer through a communication network, thereby supplying the software by data communication from the host computer to the terminal computer.

In such configuration, the terminal computer can execute a stand-alone process in a state in which the software is downloaded in the information memory medium of the terminal computer, or can execute a process by a real-time data communication with the host computer, without downloading the software. In such case, the entire system constituted by the host computer and the terminal computer connected by the communication network corresponds to the minutes generation system 1 of the present invention.

Now, a flow upon using a conference room provided with a voice-character conversion output system explained above will be explained with reference to Fig. 8. A user who wants to used a conference room provided with a voice-character conversion output system contracts in advance with the a service firm which manages a conference room provided with a voice-character conversion output system and sets an ID and a password. Then, the user logins the system by using the ID and password and a service of the minutes generation system is started. After a conference is completed, a transition is made to post processes such as a transmission of data of digital-signal processed voice. In a case where a minutes is needed immediately, an edit processing is immediately executed at the host side of the service firm and minutes data is transmitted to the conference room. The user refers to the minutes data, corrects the data if necessary and then approves of the data so that the data is established. The minutes data is output with payment being demanded in a predetermined manner. At this point, it is arranged not to execute print-out in a state where the minutes data is not established. Further, if there is no need of the minutes immediately, the above-mentioned minutes can be output later by accessing the host of the service firm.

In this embodiment, a voice-character conversion output system is explained by exemplifying a minutes generation system. However, it can be appreciated that the invention is not limited to the embodiment and, for example, a configuration of the invention can be changed and modified in any manners as far as having the arrangement for executing an output in a character form by discriminating plural voices.

The present invention of the above-described configuration provides the following advantages.

In the conference voice processing method utilizing the first conference voice recording apparatus of the present invention, when the voice data of plural speakers are entered into the voice input means in a state in which the vocalization data are registered for each identification data of the plural speakers, the voice recognition means recognizes the speaker and the content of statement of the entered voice data, based on the vocalization data and identification data registered in the vocalization memory means, and the record preparation means prepares minutes data of the recognized control of statements, edited in a predetermined form together with the identification data of the speakers, whereby the minutes data of the content of statements of the plural speakers can be automatically prepared on real time basis, edited in a predetermined form with the identification data, so that the minutes of the conference can be prepared without an exclusive worker.

In the conference voice processing method utilizing the second conference voice recording apparatus of the present invention, when the voice data of statements of plural speakers are entered into the voice input means and at the same time the identification data of the speakers making statements are entered in succession in the identification input means in a state in which the vocalization data are registered for each identification data of the plural speakers, the pronunciation selection means selects the vocalization data of the corresponding speaker from the vocalization memory means, corresponding to the entered identification data, then the voice recognition means recognizes the content of statement of the entered voice data, based on the selected vocalization data, and the record preparation means prepares minutes data of the recognized content of statements, edited in a predetermined form together with the identification data of the speakers, whereby the minutes data of the content of statements of the plural speakers can be automatically prepared on real time basis, edited in a predetermined form with the identification data, so that the minutes of the conference can be prepared without an exclusive worker. Also the speaker making statement can be securely specified without the voice recognition, and the accuracy of the voice recognition of the content of statement can be improved.

In the conference voice processing method utilizing the third conference voice recording apparatus of the present invention, when the voice data of statements of plural speakers are entered respectively into the plural voice input means in a state in which the vocalization data are registered in the vocalization memory means for each identification data of the plural speakers, the voice recognition means recognizes the content of statement of the voice data entered into the plural voice input means, based on the vocalization data of the corresponding speaker registered in the vocalization memory means, and the record preparation means prepares minutes data of the recognized content of statements, edited in a predetermined form together with the identification data of the speakers, whereby the minutes data of the content of statements of the plural speakers can be automatically prepared on real time basis, edited in a predetermined form with the identification data, so that the minutes of the conference can be prepared without an exclusive worker. In particular, the speaker making statement can be almost securely specified without voice recognition, and the accuracy of voice recognition of the content of statement can be improved.

In the conference voice processing method utilizing the fourth conference voice recording apparatus of the present invention, when the plural speakers convene by data communication, there are automatically prepared, on real time basis, minutes data of the content of statements in such conference by data communication, whereby the minutes data of the content of statements of the plural speakers can be automatically prepared on real time basis, edited in a predetermined form with the identification data.

Also in the above-described conference voice recording apparatus, when, in a state in which the image display means displays the minutes data, the correction on the displayed minutes data is entered in the correction input means, the correction execution means corrects the minutes data in response to the input data, whereby the minutes data can be appropriately corrected while they are displayed, so that the minutes data can be prepared in an appropriate form even if the voice recognition is not secure.

Also when, in a state in which the image display means displays the minutes data, the approval for the displayed minutes date is entered into the approval input means for each identification data of the speakers, the approval addition means adds thus entered approval to the minutes data together with the identification data of the speaker, whereby the minutes data can also record the approvals by the speakers.

Also by the input of the approval for the minutes data in the form of voice data into the voice input means, there can be entered the approval for each speaker, by the voice data of which the speaker can be specified.

Also the record printing means prints the minutes data, so that there can be printed a document recording the content of statements of the plural speakers, together with the identification data of the speakers.

Further, the time detection means detects the current time at the input of voice data of statement of the speaker and the record preparation means utilizes the detected time in preparing the minutes data, whereby the prepared minutes data can also record, for example, the time of statement by the speaker.

## Claims

1. A conference voice processing method comprising steps of:
registering vocalization data for each identification data of plural speakers;
entering voice data of statements of the plural speakers;
recognizing the speaker and content of statement of the entered voice data, based on said vocalization data and said identification data; and
forming minutes data of the recognized content of statements, edited in a predetermined form together with the identification data of the speakers.

2. A conference voice processing method comprising steps of:
registering vocalization data for each identification data of plural speakers;
entering voice data of statements of the plural speakers individually for each thereof;
recognizing the content of statement of the individually entered voice data, based on said vocalization data and said identification data of the corresponding speaker; and
forming minutes data of the recognized content of statements, edited in a predetermined form together with the identification data of the speakers.

3. A conference voice processing method comprising steps of:
registering vocalization data for each identification data of plural speakers;
entering voice data of statements of the plural speakers;
entering the identification data of the speakers making statements in succession;
selecting the vocalization data of the speaker, corresponding to the entered identification data;
recognizing the content of statement of the entered voice data, based on the selected vocalization data; and
forming minutes data of the recognized content of statements, edited in a predetermined form together with the identification data of the speakers.

4. A conference voice processing method in a data communication apparatus in which plural speakers execute data communication, the method comprising steps of:
registering vocalization data for each identification data of the plural speakers convening by data communication; and
forming minutes data from the voice data of statements of the plural speakers in data communication, by a conference voice processing method according to any of claims 1 to 3.

5. A conference voice processing method according to any of claims 1 to 4, wherein current time detected at the entry of the voice data of the speaker, and the minutes data are formed utilizing also the detected time.

6. A conference voice recording apparatus comprising:
vocalization memory means for registering vocalization data for each identification data of plural speakers;
voice input means for entering voice data of statements of the plural speakers;
voice recognition means for recognizing the speaker and content of statement of the entered voice data into said voice input means, based on the vocalization data and the identification data registered in said vocalization memory means; and
record forming means for forming minutes data of the content of statements recognized by said voice recognition means, edited in a predetermined form together with the identification data of the speakers.

7. A conference voice recording apparatus comprising:
vocalization memory means for registering vocalization data for each identification data of plural speakers;
voice input means for entering voice data of statements of the plural speakers;
identification input means for successively entering the identification data of the speakers making statements;
vocalization selection means for selecting the vocalization data of the speaker from said vocalization memory means, corresponding to the identification data entered into said identification input means;
voice recognition means for recognizing the content of statement of the voice data entered into said voice input means, based on the vocalization data selected by said pronunciation selection means; and
record preparation means for preparing minutes data of the content of statements recognized by said voice recognition means, edited in a predetermined form together with the identification data entered into the identification input means.

8. A conference voice recording apparatus comprising:
vocalization memory means for registering vocalization data for each identification data of plural speakers;
plural voice input means for individually entering voice data of statements of the plural speakers;
voice recognition means for recognizing the content of statement of the voice data entered into the plural voice input means, based on the vocalization data of the corresponding speaker in said vocalization memory means; and
record preparation means for preparing minutes data of the content of statements recognized by said voice recognition means, edited in a predetermined form together with the identification data of the speakers.

9. A data communication apparatus for data communication of plural speakers, comprising a conference voice processing apparatus according to any of claims 6 to 8, wherein:
said vocalization memory means registers vocalization data for each identification data of the plural speakers convening by data communication; and
said record preparation means prepares minutes data from the voice data of statements of the plural speakers in data communication.

10. A conference voice recording apparatus according to any of claims 6 to 9, further comprising:
image display means for displaying said minutes data;
correction input means for entering a correction on the minutes data displayed by said image display means; and
correction execution means for correcting said minutes data, corresponding to the input data of said correction input means.

11. A conference voice recording apparatus according to any of claims 6 to 10, further comprising:
approval input means for entering an approval for the minutes data displayed by said image display means, for each identification data of the speakers; and
approval addition means for adding the approval, entered into said approval input means, to said minutes data together with the identification data of the speaker.

12. A conference voice recording apparatus according to claim 11, wherein said approval input means enters the approval for the minutes data in the form of voice data by said voice input means.

13. A conference voice recording apparatus according to any of claims 6 to 12, further comprising record printing means for printing said minutes data.

14. A conference voice recording apparatus according to any of claims 6 to 13, further comprising time detection means for detecting the current time at the entry of the voice data of statement of the speaker into said voice input means;
wherein said record preparation means prepares the minutes data, also utilizing the time detected by said time detection means.

15. An information memory medium storing a software readable by a computer to which connected are vocalization memory means for registering the vocalization data for each identification data of plural speakers, and voice input means for entering the voice data of statement of the plural speakers;
wherein said memory medium stores a program for causing said computer to execute;
recognition of the speaker and the content of statement of the voice data entered into said voice input means, based on the vocalization data and identification data registered in said vocalization memory means; and
preparation of minutes data of the recognized content of statements, edited in a predetermined form together with the identification data of the speakers.

16. An information memory medium storing a software readable by a computer to which connected are vocalization memory means for registering the vocalization data for each identification data of plural speakers, and voice input means for entering the voice data of statement of the plural speakers;
wherein said memory medium stores a program for causing said computer to execute;
reception of the input of the identification data of the speaker making statement;
reception of the input of the identification data of the speaker making statement;
selection of the vocalization data of the speaker from said vocalization memory means, corresponding to the entered identification data;
recognition of the content of statement of the voice data entered into said voice input means, based on the selected vocalization data; and
formation of minutes data of the recognized content of statements, edited in a predetermined form together with the entered identification data.

17. A voice-character conversion output system comprising:
vocalization memory means for registering vocalization data for each of plural identification data;
voice input means for entering data of the plural voices;
voice recognition means for recognizing the voices entered into said voice input means, based on the vocalization data and the identification data registered in said vocalization memory means; and
record forming means for forming character data of a content of the voice recognized by said voice recognition means, edited in a predetermined form together with the identification data.

18. A speech processing system comprising:
means for storing identification data of plural speakers;
means for storing speech recognition reference models for each of the plural speakers;
means for receiving voice data of statements made by one or more of said plural speakers;
means for comparing said voice data with said identification data to determine the one or more speakers in the received voice data;
means for recognising the content of said statements by comparing said voice data with the speech recognition reference models for the identified speakers; and
means for generating minutes data of the recognised content of said statements.

19. A storage medium storing processor implementable instructions for controlling the processor to implement the method of any one of claims 1 to 5.

20. Processor implementable instructions for controlling a processor to implement the method of any one of claims 1 to 5.
